# EUROPEAN PATENT SPECIFICATION

(11) **EP 2 012 553 B1**
(45) Date of publication and mention of the grant of the patent: **06.01.2016**
(21) Application number: 07741935.6
(22) Date of filing: 19.04.2007
(51) Int. Cl.: H04W 48/16, H04W 88/06

(54) **MULTIMODE PORTABLE TERMINAL AND MODE SWITCH-OVER METHOD**
MULTIMODALES TRAGBARES ENDGERÄT UND MODUSUMSCHALTVERFAHREN
TERMINAL PORTABLE MULTI-MODE ET PROCÉDÉ DE BASCULEMENT DE MODE

(30) Priority: 26.04.2006 JP 2006122565
(43) Date of publication of application: 07.01.2009
(73) Proprietor: NEC Corporation, Minato-ku Tokyo 108-8001 (JP)
(72) Inventor: ONO, Tomohiro, Tokyo 108-8001 (JP)
(74) Representative: Betten & Resch
(86) International application number: PCT/JP2007/058499
(87) International publication number: WO 2007/123170

(56) References cited:
- WO-A1-2005/048475
- JP-A- 2000 278 761
- JP-A- 2002 094 628
- JP-A- 2003 299 150
- US-A1- 2004 009 751
- US-A1- 2004 075 675
- US-A1- 2005 227 692

## Description

### TECHNICAL FIELD

The present invention relates to a multimode portable terminal which can be connected to a plurality of radio communication networks of different standards, and to a mode switch-over method of the multimode portable terminal.

### BACKGROUND ART

Conventionally, there has been developed a dual mode portable terminal using a mobile radio communication network and a radio LAN. The dual mode potable terminal performs communications via the mobile radio communication network on the outdoor, while performing communication via the radio LAN on the indoor (inside buildings and homes, such as hot spots).

Characteristics regarding services of each of the mobile radio communication network and the radio LAN are as follows. That is, advantages of the service of the mobile radio communication network are that it is capable of covering a wide area, excellent in mobile speed and communication quality, and optimum for providing an audio service. Disadvantages thereof are that it has low communication speed so that unsuitable for high-speed data communication, and fees are expensive.

In the meantime, an advantage of the service of the radio LAN is that it is optimum for the high-speed data communication, and a disadvantage thereof is that it can cover only a narrow area. Even inside buildings, the service is limited to an area such as a hot spot. Inside homes, general users need to have it installed and set, which is troublesome for the users. Further, to use a fixed-type outdoor system, antenna pointing for a terminal station is difficult. Therefore, its construction cost remains high.

The mobile radio communication network can cover a wide service area, however, its communication speed is slow. Meanwhile, the radio LAN can achieve high-speed communication, even though the service area is very limited, such as to the indoors, outdoor hot spots, and the like. Therefore, even if the high-speed data communication by the LAN can be achieved indoors, the user needs to switch-over to the low-speed data communication once the user steps out to the outside.

A dual mode or a dual band portable terminal specialized for a voice communication service can be found in Patent Document 1 (Japanese Unexamined Patent Publication 11-298964) and Patent Document 2 (International Re-publication WO01/084873).

Disclosed in Patent Document 1 is a terminal which: receives control channels of two mobile telephone systems at a position where the service areas of each of those mobile telephone systems overlaps, and registers only the position for one of those systems while storing the control channel number of the other system to the memory. When it becomes necessary to search the control channel of the other system, the control channel corresponding to the stored channel number is used so that the position can be registered to the base station of the other system quickly.

Disclosed in Patent Document 2 is a terminal which, when there is an incoming-call reception request for a cellular mobile station whose position is registered to a terrestrial system but the cellular mobile station cannot receive it via a terrestrial exchange station of a mobile communication network, utilizes a dual function to receive it at a satellite single mobile station whose position is registered to a satellite system, via a satellite exchange station of a satellite communication network.

In addition to those, terminals capable of performing data communications with a plurality of communication modes are disclosed in Patent Document 3 (Japanese Unexamined Patent Publication 2004-289487) and Patent Document 4 (Japanese Patent Application Publication 2005-532759).

The one disclosed in Patent Document 3 is a mobile device capable of performing communications by a plurality of communication modes, which includes: an availability judging part which judges whether or not a plurality of communication modes can be used at a current position of the mobile device based on an electric field intensity of a portable telephone network and an electric field intensity of a radio LAN; and a communication mode selecting part which selects a communication mode that can measure the current position most accurately, among the communications modes that are judged as available. For example, when a potable telephone is selected, the current position of the mobile device is estimated, and the judgment result regarding the availability is transmitted to an information providing server along with the information that specifies the current position. Thereafter, the judgment results regarding the availability of a plurality of mobile devices stored in the information providing server are referred, so that the availability regarding the plurality of communication modes changing chronologically can be followed accurately.

The one disclosed in Patent Document 4 is a radio client device used in a communication network having compatibility with the Internet protocol. It is formed to communicate with the communication network according to one of a plurality of communication standards, and to select one of a plurality of network interfaces for being connected to the communication network. It is formed to make the selections automatically in accordance with a prescribed network interface selecting policy loaded inside the client device.

Recently, high-speed data communications have become verypopular.. Therefore, there is desired a multimode portable terminal capable of, by a single terminal, handling various contents via a plurality of radio communication networks.

However, with the above-described conventional techniques, connections to the plurality of radio communication networks are fixedly determined by default or automatically changed as determined. Thus, those are not formed as systems that allow users to perform manual switch-over operations in various ways as desired.
Patent Document 1: Japanese Unexamined Patent Publication 11-298964
Patent Document 2: International Re-publication WO01/084873
Patent Document 3: Japanese Unexamined Patent Publication 2004-289487
Patent Document 4: Japanese Patent Application Publication 2005-532759

US 2004/009751 A1 discloses techniques for selection of wireless network interfaces for data communication within an access terminal. The techniques rely on a set of interface selection rules to identify network interfaces that are eligible to serve a particular communication application or the type of traffic forwarded on behalf of another device. In addition, each network interface may be assigned a priority. Upon identifying eligible interfaces, e.g., interfaces that satisfy all of the interface selection rules, the techniques involve selection of the eligible interface having the highest priority. The assigned priority may be dynamically adjusted based on the connection state of the interfaces, prioritization according to changes in system latency, interface cost, and the like.

### DISCLOSURE OF THE INVENTION

An object of the present invention is to provide a multimode portable terminal and a mode switch-over method, which are capable of switching network connection modes in various ways in accordance with various needs, e.g., high-quality and high-speed data communication, inexpensive data communication, etc., in these days where multimedia communications have become very popular.

Another object of the present invention is to improve the operability for switching the modes in various ways.

The present invention is defined in the independent claims. The dependent claims define embodiments.

A mode switch-over method is a method for a multimode portable terminal capable of being connected to a plurality of radio communication networks of different standards, which: sets mode selection information in advance by input of a user; judges which area of the plurality of radio communication networks the terminal is located based on presence of control signals peculiar to each radio communication network; and selects and connects to the radio communication networks within the area according to a priority order set in advance based on the mode selection information.

The mode selection information is set manually by having a user make selection from a mode selection menu that is displayed on a display of the multimode portable terminal.

The mode selection menu includes at least three alternatives of "select from infrastructures", "select from contents", and "select from indexes". In a case of "select from infrastructures", the mode selection information according to selection made directly from the plurality of radio communication networks is set; in a case of "select from contents", the mode selection information according to selection made further from types of contents is set based on a database; and in a case of "select from indexes", the mode selection information according to selection made further from communication indexes is set based on the database.

The plurality of radio communication networks of different standards are a mobile radio communication network, an IEEE802.16e WiMAX (Worldwide Interoperability for Microwave Access) network, and an IEEE802.1.1 radio LAN (Local Area Network), for example.

A multimode portable terminal includes: a mode selecting device for setting mode selection information in advance by input of a user; a network judging device for judging which area of the plurality of radio communication networks the terminal is located based on presence of control signals peculiar to each radio communication network; and a network selecting device for selecting and connecting to the radio communication networks within the area according to a priority order set in advance based on the mode selection information.

When an Ethernet (registered trademark) (IEEE802.3 standard LAN) interface for performing data communication by being connected to external equipment is provided to the multimode portable terminal, it is possible to become associated with an on-vehicle car navigation via the Ethernet (registered trademark) interface.

A first effect of the present invention is that it enables a single terminal to cover a widened area for receiving inexpensive high-speed data communications and to select the modes depending on the target services and contents as well as the desired quality, thereby allowing the user side to avoid troublesome setting.

The reason for this is that the present invention has three mobile radio systems of different characteristics loaded thereon for making it possible to select the switch-over method in accordance with the mobile radio communication the user desires.

A second effect is that it allows the provider sides to expect an increase in the number of subscribers.

The reason for this is that it becomes unnecessary to carry a plurality of terminals for each service by the use of the multimode portable terminal. In addition, it is possible to avoid going through useless settings by simply using a single telephone number. Furthermore, it is also because the subscribers can receive pleasant services with reasonable fees.

A third effect is that it can stimulate the entire market with setup of infrastructures.

The reason for this is that the number of contents is expected to increase through achieving the multimode terminals including WiMAX as a new service.

The present invention makes it possible to expand the area for the high-speed data communication and to provide high-speed and inexpensive or high-quality optimum service, through achieving the multimode terminal having the service of WiMAX provided in addition to the dual-mode services by the existing mobile communication network and radio LAN.

Conventionally, when a user once steps out of a radio LAN area while receiving a high-speed data communication service by the radio LAN inside a room, the mode is switched over to a low-speed data communication by a mobile communication network. However, by having services of WiMAX developed in urban districts, it is possible with the present invention to perform a semi-high speed data communication whose speed is not as slow as that of the mobile communication network, even though it is slightly slower than that of the radio LAN in urban districts.

Hereinafter, the merits of the service of WiMAX will be described.

The status of WiMAX can be positioned between the mobile communication network and the radio LAN in terms of the range of areas and the mobility. Regarding the service, the most advantageous point is that it is capable of achieving high-speed data communication with NOLS (Non Line of Sight). Further, a broadcast mode for 3G (third-generation portable telephones) can be the strong point as well, and it is possible to utilize the high-speed data communication and digital broadcast inside a building where no hot spot for the radio LAN is provided or inside a house where no access point is placed, without minding the setting position of the terminal for the WiMAX base station located on the outdoor.

In data communication, an infrastructure capable of performing high-speed and inexpensive communication is selected with default. However, a user having a priority-order switch-over system can select the mobile communication network, WiMAX, and the radio LAN for each data communication in accordance with the communication speeds and fees of the infrastructures within the communication area range. In the meantime, high-quality communication and the mobility are the first priority for performing voice communication. The voice communication can also be switched over in the same manner as that of the data communication. Further, as a method for determining the default, it is possible to use a method of setting indexes such as the communication speed, the communication quality, and the fee, or to set the services to be utilized. With this, users who are not so knowledgeable about the advantages and disadvantages of each infrastructure can enjoy the optimum services.

Furthermore, it is not only capable of performing voice communication but also capable of downloading ring tone sounds and games at a high speed by using a single multimode portable terminal alone. In addition, the multimode portable terminal of the present invention also functions as an extension module by having Ethernet (registered trademark) loaded as an interface and being connected to a personal computer, a portable information terminal, and a car navigation having Ethernet (registered trademark) as the interface.

### BRIEF DESCRIPTION OF THE DRAWINGS

FIG. 1 is a block diagram of a network using a multimode portable terminal of the present invention;
FIG. 2 is a block diagram showing a structure of the multimode portable terminal according to the present invention;
FIG. 3 is an illustration showing an example of connection between a personal computer or a PDA and the multimode portable terminal having an Ethernet (registered trademark) interface loaded thereon;
FIG. 4 is an illustration hierarchically showing each mode that is selected from a mode selection menu;
FIG. 5 is a flowchart showing a network connecting procedure executed by menu selection;
FIG. 6 is a flowchart showing a network connecting procedure executed by menu selection;
FIG. 7 is a flowchart showing a network connecting procedure executed by menu selection;
FIG. 8 is a flowchart showing a network connecting procedure executed by menu selection;
FIG. 9 is a flowchart showing a network connecting procedure executed by menu selection;
FIG. 10 is a flowchart showing a network connecting procedure executed by menu selection;
FIG. 11 is a flowchart showing a network connecting procedure executed by menu selection;
FIG. 12 is a flowchart showing a network connecting procedure executed by menu selection; and
FIG. 13 is an illustration showing an example of connection between an on-vehicle car navigation and the multimode portable terminal having an Ethernet (registered trademark) interface loaded thereon.

### REFERENCE NUMERALS

1 Base station control device
2 Mobile communication net base station
3 WiMAX base station
4 Radio LAN base station
5 Multimode portable terminal
6 Ethernet (registered trademark) interface
7 Personal computer, PDA, etc.
8 On-vehicle car navigation
9 Rear-seat display
51 Mode selecting device
52 Network judging device
53 Network selecting device

### BEST MODE FOR CARRYING OUT THE INVENTION

Next, exemplary embodiments of the invention will be described in detail by referring to the accompanying drawings.

### FIRST EXEMPLARY EMBODIMENT

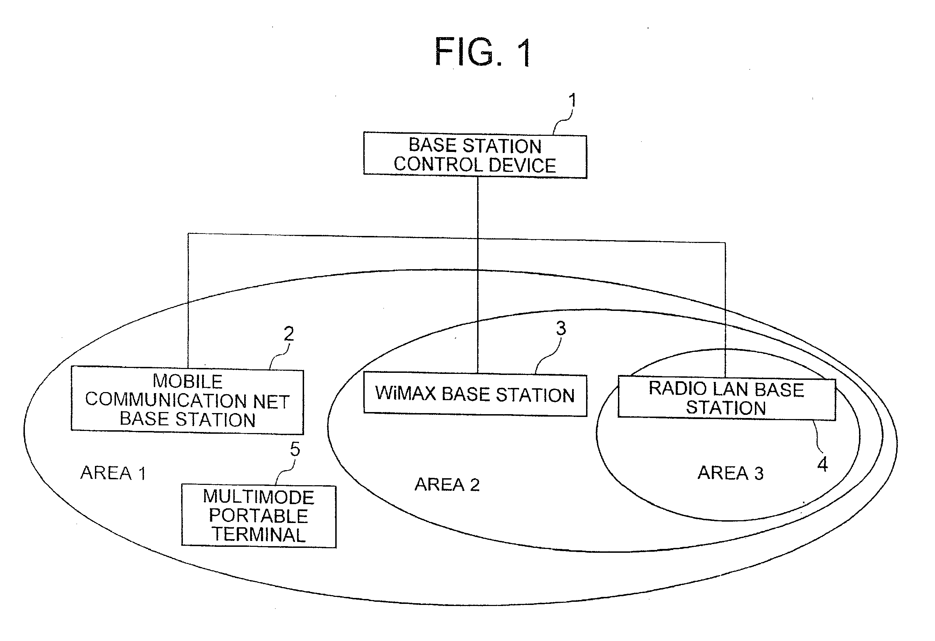

FIG. 1 is a block diagram of a network using a multimode portable terminal. An area 1 indicates a service range of a mobile radio communication network (referred to as "mobile communication net" in short hereinafter), an area 2 indicates a service range of an IEEE802.16e WiMAX network (referred to as "WiMAX" in short hereinafter), and an area 3 indicates a service range of an IEEE802.11 radio LAN (referred to as "radio LAN" in short hereinafter), and base stations 2, 3, and 4 are placed therein, respectively. FIG. 1 also shows that a multimode portable terminal 5 is currently located within the area 1. The base station 3 of WiMAX is controlled by a base station control device 1.

The areas are wider in order of "mobile communication net (area 1) > WiMAX (area 2) > radio LAN (area 3)". Inversely, the communication speeds are faster in order of "radio LAN > WiMAX > mobile communication net.

As a principle, the mobile communication net is used for voice communication in all the eases. However, VoIP (Voice over Internet Protocol) communication can also be selected when it is desired to select inexpensive telephonic communication in the area 2 within the service range of WiMAX and in the area 3 within the service range of the radio LAN.

Users can receive high-speed data communication services in the area 3 such as a home or an office having an access point of the radio LAN or outdoor/indoor hot spots. Once going out of the radio LAN service area or to the area 2 such as inside a home or an office that has no radio LAN access point provided therein, the user becomes incapable of receiving the mobile communication net service but can receive the WiMAX service. The area 2 herein is assumed as city areas or urban districts. In the area 2, it is possible to receive services of higher speed than that of the mobile communication through WiMAX, even though the speed is slower than that of the radio LAN. In the suburbs and mountainous regions outside the service area 2 of WiMAX, the user can receive data services via the mobile communication net. In this case, it is not possible to perform high-speed communication but possible to perform low-speed data communication such as browsing WEB.

The data communication speed via the mobile communication net has been shifted from 2.5G to 3G, so that it has become faster than before. However, the speed of the mobile communication net is still so slow that it cannot be compared with the speed of the radio LAN. Therefore, it used to take a lot of time and cost to download contents such as still images, dynamic images, ring tone sounds, and games with the portable telephone via data communication. However, the time and the cost can both be decreased by downloading those in the area 2 or the area 3.

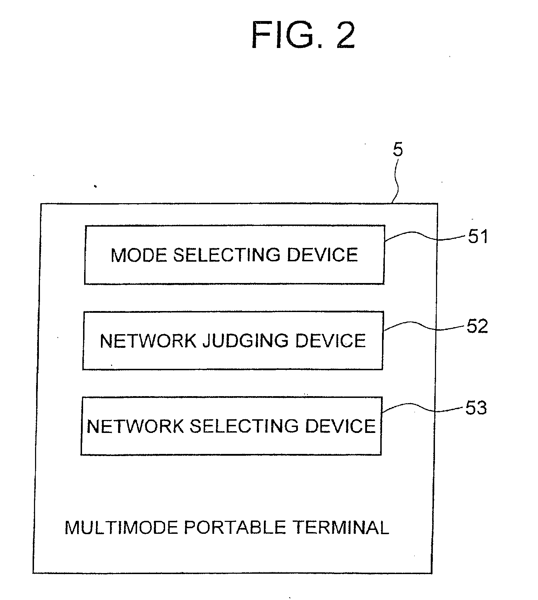

As described above, it becomes possible to select various communication modes according to various needs, by making it possible to select the three different standard radio communication networks such as the mobile communication net, WiMAX, and the radio LAN at will in consideration of each service content and characteristics. In order to achieve it, as shown in FIG. 2, the multimode portable terminal 5 according to the present invention includes: a mode selecting device 51 for setting mode selection information in advance by input of the user; a network judging device 52 for judging which area of the above-described three radio communication networks the terminal is located based on presence of control signals peculiar to each network; and a network selecting device 53 for selecting and connecting to the radio communication network within the area according to a priority order set based on the mode selection information.

The mode selecting device 51 displays a mode selection menu on a display of the multimode portable terminal 5. When the user makes a selection from the mode selection menu, the mode selection information is set manually and stored to a memory provided inside the multimode portable terminal 5. This mode selection information contains information for determining the priority order when connecting to the three networks such as the mobile communication net, WiMAX, and the radio LAN.

The network judging device 52 judges which of the areas of the above-described three radio communication networks the terminal is located according to presence of control signals peculiar to each network, and performs connection processing of the radio communication networks that are within the area based on the priority order determined according to the mode selection information stored in the memory.

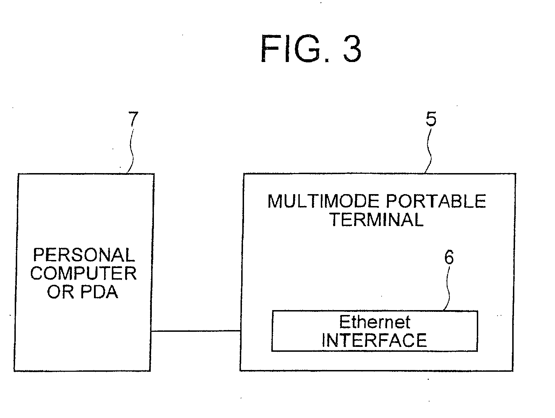

The multimode portable terminal 5 can perform high-speed data communication such as voice communication as well as downloading ring tone sounds and game software by the device itself. In addition, as shown in FIG. 3, by having an Ethernet

(registered trademark) interface 6 loaded to the multimode terminal device 5 as an external interface and by being connected to a personal computer or a PDA (Personal Digital Assistance) 7 having the Ethernet (registered trademark) interface, for example, the multimode terminal device 5 can function as an extension module for the communications performed therebetween. With this, high-speed data communication can be performed.

In the above, described is a case that builds the mode selection device 51, the network judging device 52, and the network selecting device 53 to be mounted to the multimode portable terminal 5 as hardware. However, the present invention is not limited only to such case. The present invention may have the mode selection device 51, the network judging device 52, and the network selecting device 53 to be mounted to the multimode portable terminal 5 as software (multimode portable terminal program) for enabling a CPU of a computer to execute the functions of those devices on a program.

Next, a mode switch-over method by the multimode portable terminal 5 according to the present invention will be described by referring to flowcharts.

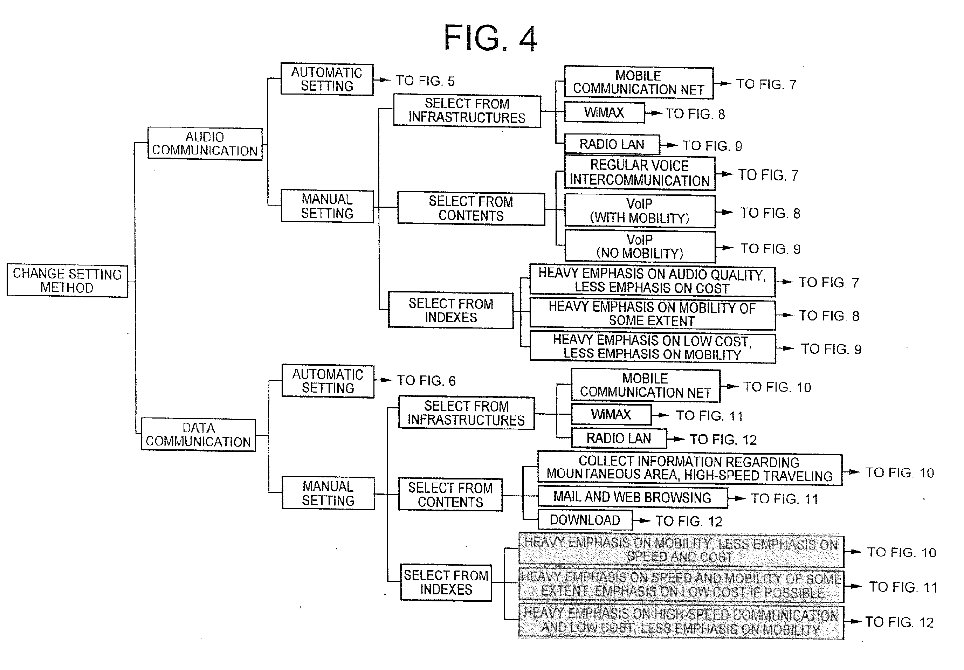

FIG. 4 hierarchically shows each mode that is selected from the mode selection menu. On a first hierarchy, two modes of voice communication and data communication can be selected. On a second hierarchy, two modes of automatic setting and manual setting can be selected for each of the voice communication and the data communication.

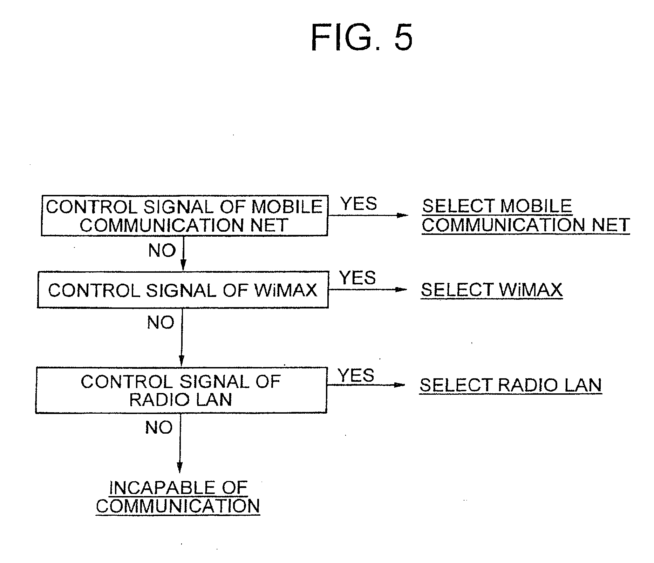

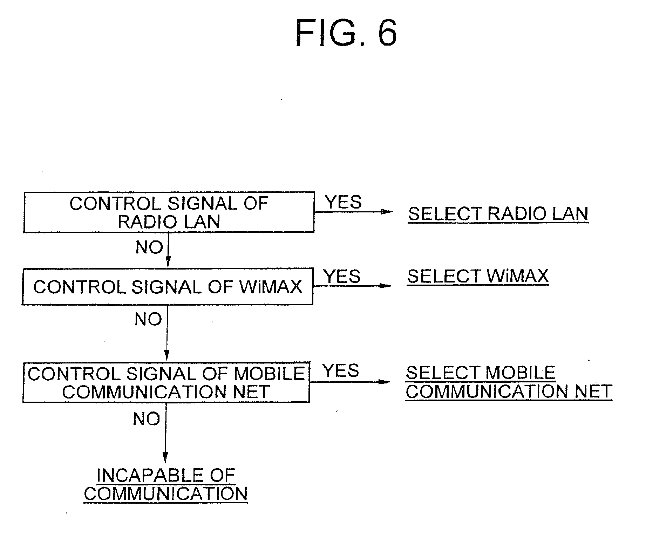

As shown in FIG. 5, in the manual setting of the voice communication, the connection order is determined by default in order of the mobile communication net, WiMAX, the radio LAN, and presence of the respective control signals is judged in this order. When there are control signals, the multimode portable terminal 5 is connected to each network in this order. As shown in FIG. 6, in the automatic setting of the data communication, the connection order is also determined by default in order. The area capable of performing high-speed and inexpensive data communication is given a higher priority, so that the connection order is set in order of the radio LAN, WiMAX, and the mobile communication net and presence of the respective control signals is judged in this order. When there are control signals, the multimode portable terminal 5 is connected to each network in this order. In both cases, the default can be changed.

For both cases of the voice communication and the data communication, when the manual setting is selected, the user is to select one from "select from infrastructures", "select from contests", and "select from indexes", as a step 1.

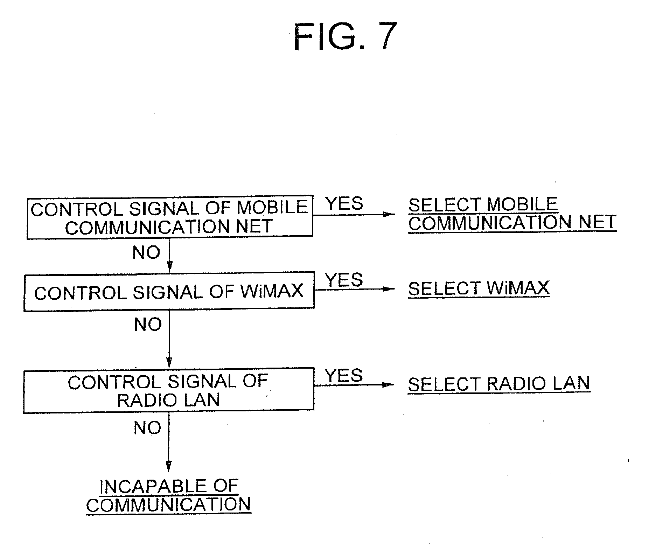

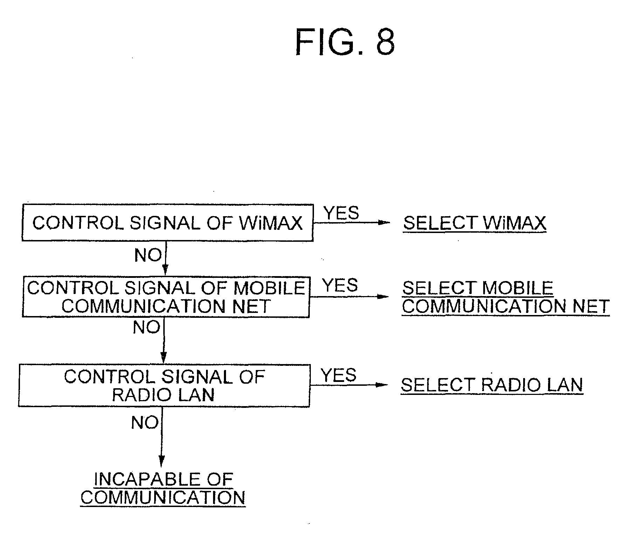

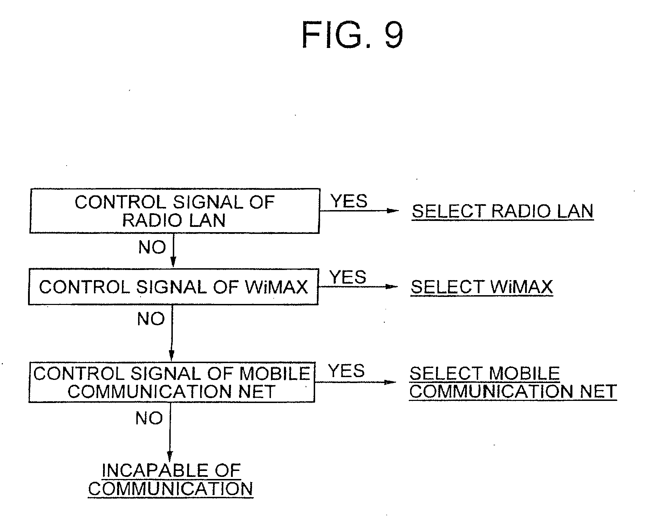

When the user selects "select from infrastructure" in the voice communication mode, the user then is to select a specific name of the infrastructure from "mobile communication net", "WiMAX", and "radio LAN" as a step 2. When the "mobile communication net" is selected, as shown in the flowchart of FIG. 7, presence of the respective control signals is judged in order of the mobile communication net, WiMAX, and the radio LAN. When there are the control signals, the multimode portable terminal 5 is connected to each network in this order. Further, when the "WiMAX" is selected, as shown in the flowchart of FIG. 8, presence of the respective control signals is judged in order of WiMAX, the mobile communication net, and the radio LAN. When there are the control signals, the multimode portable terminal 5 is connected to each network in this order. Furthermore, when "radio LAN" is selected, as shown in the flowchart of FIG. 9, presence of the respective control signals is judged in order of the radio LAN, WiMAX, and the mobile communication net. When there are the control signals, the multimode portable terminal 5 is connected to each network in this order.

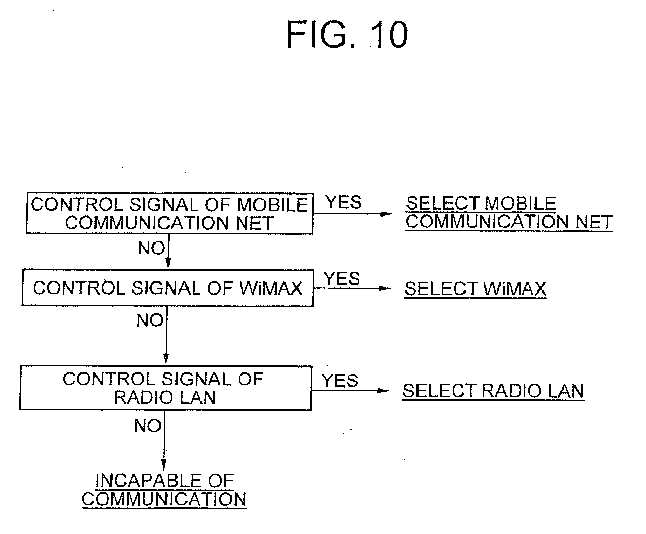

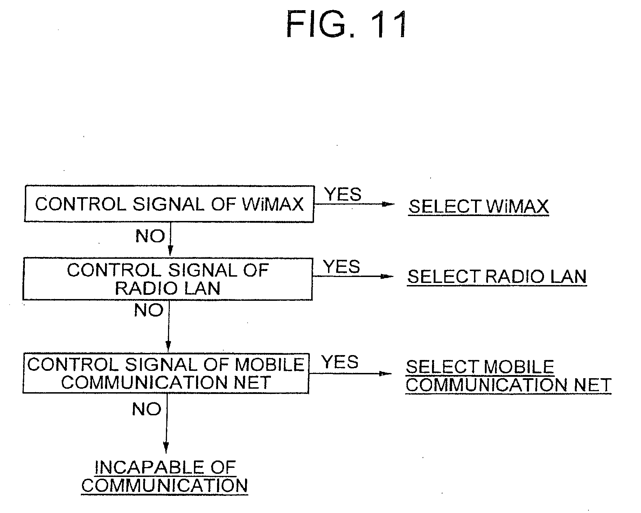

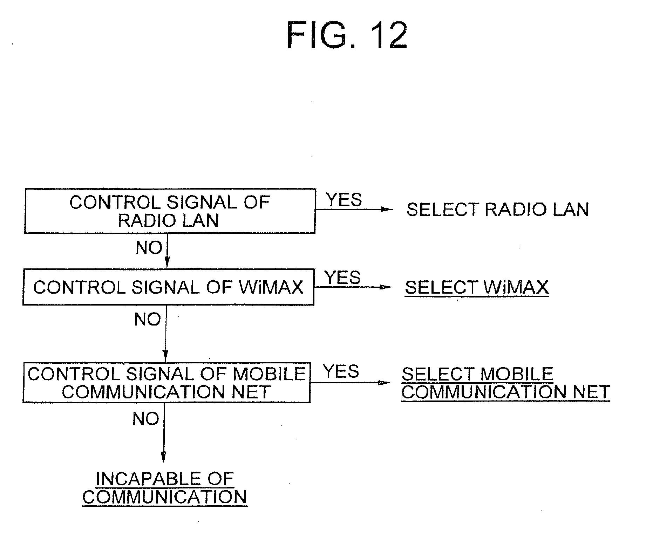

In the meantime, when "select from infrastructures" is selected in the data communication mode, the user is also to select a specific name of the infrastructure from "mobile communication net", "WiMAX", and "radio LAN" as the step 2. When the "mobile communication net" is selected, as shown in the flowchart of FIG. 10, presence of the respective control signals is judged in order of the mobile communication net, WiMAX, and the radio LAN. When there are the control signals, the multimode portable terminal 5 is connected to each network in this order. Further, when the "WiMAX" is selected, as shown in the flowchart of FIG. 11, presence of the respective control signals is judged in order of WiMAX, the radio LAN, and the mobile communication net. When there are the control signals, the multimode portable terminal 5 is connected to each network in this order, Furthermore, when "radio LAN" is selected, as shown in the flowchart of FIG. 12, presence of the respective control signals is judged in order of the radio LAN, WiMAX, and the mobile communication net. When there are the control signals, the multimode portable terminal 5 is connected to each network in this order.

When "select from contents" is selected in the voice communication mode, the user is to select one from the three items "regular audio quality", "VoIP (with mobility)", and "VoIP (no mobility)" as a next step. When "regular audio quality" is selected, as shown in the flowchart of FIG. 7, presence of the respective control signals is judged in order of the mobile communication net, WiMAX, and the radio LAN by referring to a database. When there are the control signals, the multimode portable terminal 5 is connected to each network in this order. When "VoIP (with mobility)" is selected, as shown in the flowchart of FIG. 8, presence of the respective control signals is judged in order of WiMAX, the mobile communication net, and the radio LAN also by referring to the database. When there are the control signals, the multimode portable terminal 5 is connected to each network in this order. When "VoIP (no mobility)" is selected, as shown in the flowchart of FIG. 9, presence of the respective control signals is judged in order of the radio LAN, WiMAX, and the mobile communication net also by referring to the database. When there are the control signals, the multimode portable terminal 5 is connected to each network in this order.

When "select from indexes" is selected in the voice communication mode, the user is to select one from the three items such as "heavy emphasis on audio quality, less emphasis on cost", "heavy emphasis on mobility of some extent", and "heavy emphasis on low cost, less emphasis on mobility" as a next step. When "heavy emphasis on audio quality, less emphasis on cost" is selected, as shown in the flowchart of FIG. 7, presence of the respective control signals is judged in order of the mobile communication net, WiMAX, and the radio LAN by referring to the database. When there are the control signals, the multimode portable terminal 5 is connected to each network in this order. When "heavy emphasis on mobility of some extent" is selected, as shown in the flowchart of FIG. 8, presence of the respective control signals is judged in order of WiMAX, the mobile communication net, and the radio LAN also by referring to the database. When there are the control signals, the multimode portable terminal 5 is connected to each network in this order. When "heavy emphasis on low cost, less emphasis on mobility" is selected, as shown in the flowchart of FIG. 9, presence of the respective control signals is judged in order of the radio LAN, WiMAX, and the mobile communication net also by referring to the database. When there are the control signals, the multimode portable terminal 5 is connected to each network in this order.

In the meantime, when "select from contents" is selected in the data communication mode, the user is to select one from three items such as "obtain information regarding mountainous area, high-speed travel", "mail and WEB browsing", "download" as a next step. When "obtain information regarding mountainous area, high-speed travel" is selected, as shown in the flowchart of FIG. 10, presence of the respective control signals is judged in order of the mobile communication net, WiMAX, and the radio LAN by referring to the database. When there are the control signals, the multimode portable terminal 5 is connected to each network in this order. When "mail and WEB browsing" is selected, as shown in the flowchart of FIG. 11, presence of the respective control signals is judged in order of WiMAX, the radio LAN, and the mobile communication, net by also referring to the database. When there are the control signals, the multimode portable terminal 5 is connected to each network in this order. When "download" is selected, as shown in the flowchart of FIG. 12, presence of the respective control signals is judged in order of the radio LAN, WiMAX, and the mobile communication net by also referring to the database. When there are the control signals, the multimode portable terminal 5 is connected to each network in this order.

when "select from indexes" is selected in the data communication mode, the user is to select one from three items such as "heavy emphasis on mobility, less emphasis on speed and cost", "heavy emphasis on speed and mobility of some extent, low cost if possible", and "heavy emphasis on high-speed communication and low cost, less emphasis on mobility" as a next step. When "heavy emphasis on mobility, less emphasis on speed and cost" is selected, as shown in the flowchart of FIG. 10, presence of the respective control signals is judged in order of the mobile communication net, WiMAX, and the radio LAN by referring to the database. When there are the control signals, the multimode portable terminal 5 is connected to each network in this order. When "heavy emphasis on speed and mobility of some extent, low cost if possible" is selected, as shown in the flowchart of FIG. 11, presence of the respective control signals is judged in order of WiMAX, the radio LAN, and the mobile communication net by also referring to the database. When there are the control signals, the multimode portable terminal 5 is connected to each network in this order. When "heavy emphasis on high-speed communication and low cost, less emphasis on mobility" is selected, as shown in the flowchart of FIG. 12, presence of the respective control signals is judged in order of the radio LAN, WiMAX, and the mobile communication net by also referring to the database. When there are the control signals, the multimode portable terminal 5 is connected to each network in this order.

### SECOND EXEMPLARY EMBODIMENT

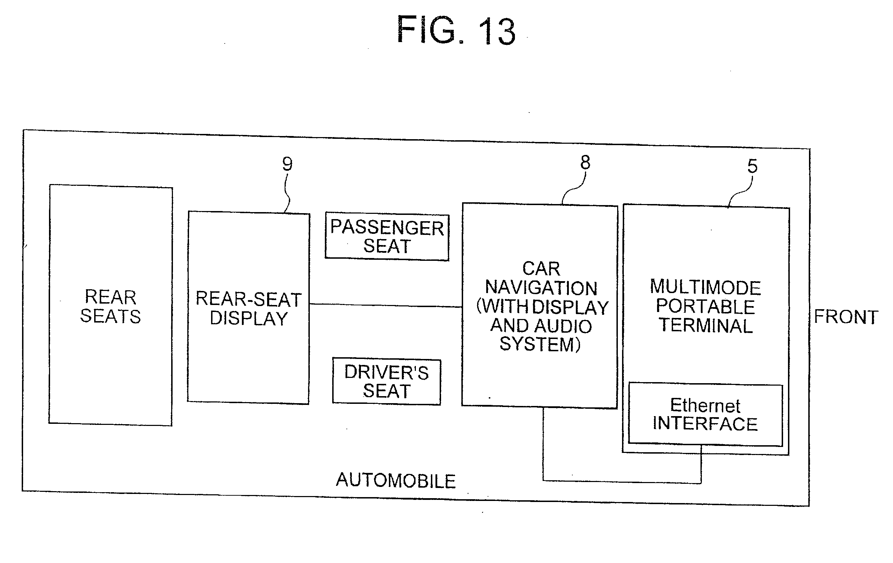

A multimode portable terminal 5 according to a second exemplary embodiment of the invention is so formed that it can be used as an extension module for communication of a car navigation 8 by having, as shown in FIG. 13, an Ethernet (registered trademark) interface 6 loaded thereon and by being connected to the on-vehicle car navigation 8 used also as audio/video equipment having an Ethernet (registered trademark) interface. In this case, a display provided to the car navigation 8 and a rear-seat display 9 can also be used as data communication displays. In addition, the multimode portable terminal 5 functions not as a voice intercommunication device but as a data communication module, as in the case of being connected to a personal computer or a PDA. While driving, it is possible to obtain information necessary for driving, such road information regarding as traffic jams, weather forecast, and the like in real time, through setting the multimode portable terminal 5 to the WiMAX mode that can provide both the mobility and the high-speed data communication. Further, it is also possible to listen to music by a digital radio, and to watch television programs by digital broadcast at the rear seats.

The modes can be switched in the manner described above also when the multimode portable terminal 5 is loaded on a vehicle. For example, the high-speed data communication can be performed in a radio LAN hot spot placed in a service area and the like of an express highway. Further, it is helpful when downloading a large amount of data such as a roadmap and a movie to be watched during a traffic jam. Furthermore, it is possible to have voice intercommunication in a service area, a parking, and the like.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

## Claims

1. A multimode portable terminal (5) capable of being connected to a plurality of radio communication networks of different standards, the terminal (5) comprising:
a mode selecting means (51) which is switchable between automatic setting and manual setting for setting a priority order of mode selection information of the plurality of radio communication networks by input of a user of the terminal (5);
a network judging means (52) for judging which area of the plurality of radio communication networks the terminal (5) is located based on presence of control signals peculiar to each radio communication network;
a network selecting means (53) for selecting one of the plurality of radio communication networks judged by the network judging means (52) based on the priority order of the mode selection information set by the mode selecting means (51) according to the automatic setting or the manual setting and connecting the portable terminal (5) to the selected radio communication network; and
an interface adapted to make the portable terminal (5) serve as an extension module for communication by having the portable terminal (5) associated with another interface provided for an external equipment (7),
wherein the mode selecting means (51) has the user select a mode selection menu displayed on a display so as to set the mode selection information, and
in both a voice communication and a data communication, the mode selection menu includes at least three alternatives of "select from infrastructures", "select from contents", and "select from indexes";
in a case of "select from infrastructures", the mode selection information according to selection, made directly from the plurality of radio communication networks is set to the mode selecting means;
in a case of "select from contents", the mode selection information according to selection made further from types of contents is set to the mode selecting means based on a database; and
in a case of "select from indexes", the mode selection information according to selection made further from communication indexes is set to the mode selecting means based on the database.

2. The multimode portable terminal (5) as claimed in claim 1, wherein the network judging means (52) is adapted to identify a mobile radio communication network, an IEEE802.16e WiMAX network, and an IEEE802.11 radio LAN as the plurality of radio communication networks of different standards.

3. The multimode portable terminal (5) as claimed in claim 1, comprising an Ethernet (registered trademark) interface (6) for performing data communication by being connected to external equipment (7).

4. The multimode portable terminal (5) as claimed in claim 3, which is configured as a communication extension module by having the interface associated with an Ethernet (registered trademark) interface (6) that is provided to the external equipment (7).

5. A multimode portable terminal program which allows a computer of a multimode portable terminal (5) capable of being connected to a plurality of radio communication networks of different standards to execute:
a function of setting a priority order of mode selection information of the plurality of radio communication networks by input of a user of the terminal (5), said function being switchable between automatic setting and manual setting;
a function of judging which area of the plurality of radio communication networks the terminal (5) is located based on presence of control signals peculiar to each radio communication network;
a function of selecting one of the plurality of radio communication networks judged by the function of judging based on the priority order of the mode selection information set by the function of selecting according to the automatic setting or the manual setting and connecting the portable terminal (5) to the selected radio communication network; and
a function of making, using an interface, the portable terminal (5) serve as an extension module for communication by having the portable terminal (5) associated with another interface provided for an external equipment (7),
wherein the function of selecting has the user select a mode selection menu displayed on a display so as to set the mode selection information, and
in both a voice communication and a data communication, the mode selection menu includes at least three alternatives of "select from infrastructures", "select from contents", and "select from indexes";
in a case of "select from infrastructures" on the mode selection menu, a function of setting the mode selection information according to selection made directly from the plurality of radio communication networks;
in a case of "select from contents" on the mode selection menu, a function of setting the mode selection information according to selection made further from types of the contents based on a database; and
in a case of "select from indexes" on the mode selection menu, a function of setting the mode selection information according to selection made further from communication indexes based on the database.

6. The multimode portable terminal program as claimed in claim 5, which allows the computer to execute a function of identifying a mobile radio communication network, an IEEE802.16e WiMAX network, and an IEEE802.11 radio LAN as the plurality of radio communication networks of different standards.

7. The multimode portable terminal program as claimed in claim 5, which allows the computer to execute a function of becoming associated with external equipment (7) via an Ethernet (registered trademark) interface (6).

8. The multimode portable terminal program as claimed in claim 5, which allows the computer to execute a function of becoming associated with Ethernet (registered trademark) interface (6) that is provided to external equipment (7) via the Ethernet (registered trademark) interface (6).

9. A mode switch-over method for a multimode portable terminal (5) capable of being connected to a plurality of radio communication networks of different standards, comprising:
setting a priority order of mode selection information of the plurality of radio communication networks by input of a user of the terminal (5), said setting being switchable between automatic setting and manual setting;
judging which area of the plurality of radio communication networks the terminal (5) is located based on presence of control signals peculiar to each network;
selecting one of the plurality of radio communication networks judged in the step of judging based on the priority order of the mode selection information set in the step of selecting according to the automatic setting or the manual setting and connecting the portable terminal (5) to the selected radio communication network; and
making, using an interface, the portable terminal (5) serve as an extension module for communication by having the portable terminal (5) associated with another interface provided for an external equipment (7),
wherein the mode selection information is set manually by having a user make selection from a mode selection menu in the multimode portable terminal (5), and
in both a voice communication and a data communication, the mode selection menu includes at least three alternatives of "select from infrastructures", "select from contents", and "select from indexes";
in a case of "select from infrastructures", the mode selection information according to selection made directly from the plurality of radio communication networks is set;
in a case of "select from contents", the mode selection information according to selection made further from types of contents is set based on a database; and
in a case of "select from indexes", the mode selection information according to selection made further from communication indexes is set based on the database.

10. The mode switch-over method as claimed in claim 9, wherein the plurality of radio communication networks of different standards are a mobile radio communication network, an IEEE802.16e WiMAX network, and an IEEE802.11 radio LAN.

## Patentansprüche

1. Ein multimodales portables Terminal (5), das in der Lage ist, mit einer Mehrzahl von Funkkommunikationsnetzwerken unterschiedlicher Standards verbunden zu werden, wobei das Terminal (5) aufweist:
Modus-Auswahlmittel (51), die umschaltbar sind zwischen automatischem Setting und manuellem Setting zum Setzen einer Prioritätsreihenfolge von Modus-Auswahlinformationen der Mehrzahl von Funkkommunikationsnetzwerken durch Eingabe eines Benutzers des Terminals (5);
Netzwerk-Beurteilungsmittel (52) zum Beurteilen, in welchem Gebiet der Mehrzahl von Funkkommunikationsnetzwerken das Terminal (5) angeordnet ist basierend auf der Präsenz von Steuersignalen, die speziell für jedes Funkkommunikationsnetzwerk sind;
Netzwerk-Auswahlmittel (53) zum Auswählen eines der Mehrzahl von Funkkommunikationsnetzwerken beurteilt durch die Netzwerk-Beurteilungsmittel (52) basierend auf der Prioritätsreihenfolge der Modus-Auswahlinformationen, die gesetzt werden durch die Modus-Auswahlmittel (51) in Übereinstimmung mit dem automatischen Setting oder dem manuellen Setting und zum Verbinden des portablen Terminals (5) mit dem ausgewählten Funkkommunikationsnetzwerk; und
ein Interface, das angepasst ist, das portable Terminal (5) zu veranlassen, als ein Erweiterungsmodul zur Kommunikation zu dienen, dadurch, dass das portable Terminal (5) assoziiert wird mit einem anderen Interface, das durch ein externes Equipment (7) geliefert wird, wobei die Modus-Auswahlmittel (51) den Benutzer ein Modus-Auswahlmenü das auf einem Display angezeigt wird, auswählen lassen, um die Modus-Auswahlinformationen zu setzen, und
wobei in sowohl einer Sprachkommunikation wie auch einer Datenkommunikation das Modus-Auswahlmenü zumindest 3 Alternativen einschließt, und zwar "Auswählen von Infrastrukturen", "Auswählen von Inhalten" und "Auswählen von Indizes";
wobei im Fall von "Auswählen von Infrastrukturen" die Modus-Auswahlinformationen in Übereinstimmung mit der Auswahl, die direkt von der Mehrzahl von Funkkommunikationsnetzwerken getätigt wird, auf die Modus-Auswahlmittel gesetzt wird;
im Fall von "Auswählen von Inhalten" die Modus-Auswahlinformationen in Übereinstimmung mit der Auswahl, die ferner von Typen von Inhalten gemacht wird, gesetzt wird auf die Modus-Auswahlmittel basierend auf einer Datenbank; und
im Fall von "Auswählen von Indizes" die Modus-Auswahlinformationen in Übereinstimmung mit einer Auswahl, die gemacht wird ferner von Kommunikationsindizes, gesetzt wird auf die Modus-Auswahlmittel basierend auf der Datenbank.

2. Das multimodale portable Terminal (5) nach Anspruch 1, wobei die Netzwerk-Beurteilungsmittel (52) angepasst ist ein Funkkommunikationsnetzwerk zu identifizieren, ein IEEE802.16e WiMAX Netzwerk, und ein IEEE 802.11-Funk-LAN als die Mehrzahl von Funkkommunikationsnetzwerken mit unterschiedlichen Standards.

3. Das multimodale portable Terminal (5) nach Anspruch 1 aufweisend ein Ethernet-(eingetragene Marke)-Interface (6) zum Durchführen von Datenkommunikation durch Verbindung mit einem externen Equipment (7).

4. Das multimodale portable Terminal (5) nach Anspruch 3, das konfiguriert ist als ein Kommunikations-Erweiterungsmodul durch das Aufweisen des Interfaces, das assoziiert ist mit einem Ethernet-(eingetragene Marke)-Interface (6), das dem externen Equipment (7) bereitgestellt wird.

5. Ein multimodales portables Terminal-Programm, das einem Computer eines multimodalen portablen Terminals (5), das mit einer Mehrzahl von Funkkommunikationsnetzwerken unterschiedlicher Standards verbunden werden kann, erlaubt auszuführen:
eine Funktion des Setzens einer Prioritätsreihenfolge von Modus-Auswahlinformationen der Mehrzahl von Funkkommunikationsnetzwerken durch Eingabe eines Benutzers des Terminals (5), wobei die Funktion umschaltbar ist zwischen automatischem Setting und manuellem Setting;
eine Funktion des Beurteilens in welchem Gebiet der Mehrzahl von Funkkommunikationsnetzwerken das Terminal (5) lokalisiert ist basierend auf der Anwesenheit von Steuersignalen, die speziell für jedes Funkkommunikationsnetzwerk sind;
eine Funktion des Auswählens eines einer Mehrzahl von Funkkommunikationsnetzwerken beurteilt durch die Funktion des Beurteilens basierend auf der Prioritätsreihenfolge der Modus-Auswahlinformationen, die gesetzt werden durch die Funktion des Auswählens in Übereinstimmung mit dem automatischen Setzen oder dem manuellen Setzen und Verbinden des portablen Terminals (5) mit dem ausgewählten Funkkommunikationsnetzwerk; und
eine Funktion des Veranlassens und der Verwendung eines Interfaces des portablen Terminals (5) zum Dienen als ein Erweiterungstool für Kommunikation durch assoziieren des portablen Terminals (5) mit einem anderen Interface, das bereitgestellt wird für ein externes Equipment (7),
wobei die Funktion des Auswählens den User veranlasst ein Modus-Auswahlmenü, das auf einem Display angezeigt wird, auszuwählen, so dass die Modus-Auswahlinformation gesetzt wird, und
in sowohl Sprachkommunikation als auch Datenkommunikation das Modus-Auswahlmenü zumindest drei Alternativen einschließt, und zwar "Auswählen von Infrastruktur", "Auswählen von Inhalten", und "Auswählen von Indizes";
im Falle des "Auswählen von Infrastruktur" auf dem Modus-Auswahlmenü eine Funktion des Setzens der Modus-Auswahlinformation in Übereinstimmung mit einer Auswahl, die direkt von der Mehrzahl von Funkkommunikationsnetzwerken gemacht wird;
im Falle von "Auswählen von Inhalten" auf dem Modus-Auswahlmenü, eine Funktion des Setzens der Modus-Auswahlinformationen in Übereinstimmung mit einer Auswahl, die gemacht wird ferner aus Typen der Inhalte, basierend auf einer Datenbank; und
im Falle von "Auswählen von Indizes" auf dem Modus-Auswahlmenü, eine Funktion des Setzens der Modus-Auswahlinformationen in Übereinstimmung mit der Auswahl, die gemacht wird ferner von Kommunikationsindizes, basierend auf der Datenbank.

6. Das multimodale portable Terminal-Programm nach Anspruch 5, das dem Computer erlaubt, eine Funktion auszuführen zum Identifizieren eines mobilen Funkkommunikationsnetzwerks, eines IEEE802.16e WiMAX Netzwerk, und eines IEEE 802.11-Funk-LAN als die Mehrzahl von Funkkommunikationsnetzwerken mit unterschiedlichen Standards.

7. Das multimodale portable Terminalprogramm nach Anspruch 5, das dem Computer erlaubt, eine Funktion auszuführen des Assoziiertwerdens mit einem externen Equipment (7) über ein Ethernet-(eingetragene Marke)-Interface (6).

8. Das multimodale portable Terminalprogramm nach Anspruch 5, das dem Computer erlaubt, eine Funktion auszuführen, des Assoziiertwerdens mit einem Ethernet-(eingetragene Marke)-Interface (6), das einem externen Equipment (7) bereitgestellt wird über das Ethernet-(eingetragene Marke)-Interface (6).

9. Ein Modus-Umschalt-Verfahren für ein multimodales portables Terminal (5), das in der Lage ist mit einer Mehrzahl von Funkkommunikationsnetzwerken unterschiedlicher Standards verbunden zu werden, aufweisend:
Setzen einer Prioritätsreihenfolge von Modus-Auswahlinformationen der Vielzahl von Funkkommunikationsnetzwerken durch Eingabe eines Benutzers des Terminals (5), wobei das Setzen umschaltbar ist zwischen automatischem Setzen und manuellem Setzen;
Beurteilen in welchem Gebiet der Mehrzahl von Funkkommunikationsnetzwerken das Terminal (5) lokalisiert ist basierend auf der Anwesenheit von Steuersignalen, die speziell für jedes Netzwerk sind;
Auswählen eines der Mehrzahl von Funkkommunikationsnetzwerken, das in dem Beurteilungsschritt beurteilt wird basierend auf der Prioritätsreihenfolge der Modus-Auswahlinformationen, die in dem Schritt des Auswählens in Übereinstimmung mit dem automatischen Setzen und dem manuellen Setzen ausgewählt werden und Verbinden des portablen Terminals (5) mit dem ausgewählten Funkkommunikationsnetzwerk; und
Veranlassen unter Verwendung eines Interfaces, des portablen Terminals (5) zum Dienen als ein Erweiterungsmodul für Kommunikation durch assoziieren des portablen Terminals (5) mit einem anderen Interface, das einem externen Equipment (7) bereitgestellt wird,
wobei die Modus-Auswahlinformationen gesetzt werden manuell durch Veranlassen eines Benutzers zum Auswählen von einem Modus-Auswahlmenü in dem multimodalen Terminal (5), und
in sowohl einer Sprachkommunikation und einer Datenkommunikation schließt das Modus-Auswahlmenü zumindest drei Alternativen ein, und zwar "Auswählen von Infrastrukturen", "Auswählen von Inhalten", und "Auswählen von Indizes";
im Falle des "Auswählen von Infrastrukturen" wird die Modus-Auswahlinformation in Übereinstimmung mit der Auswahl direkt von der Mehrzahl von Funkkommunikationsnetzwerken gesetzt;
im Falle des "Auswählen von Inhalten" wird die Modus-Auswahlinformationen in Übereinstimmung mit der Auswahl ferner von Typen von Inhalten basierend auf einer Datenbank gesetzt; und
im Falle von "Auswählen von Indizes" wird die Modus-Auswahlinformation in Übereinstimmung mit der Auswahl ferner von Kommunikationsindizes besetzt, basierend auf der Datenbank.

10. Das Modus-Umschalt-Verfahren nach Anspruch 9, wobei die Mehrzahl von Funkkommunikationsnetzwerken unterschiedlicher Standards ein mobiles Funkkommunikationsnetzwerk, ein IEEE802.16e WiMAX-Netzwerk und ein IEEE802.11-Funk-LAN sind.

## Revendications

1. Terminal portable multimode (5) apte à être connecté à une pluralité de réseaux de communication radio de différentes normes, le terminal (5) comprenant :
un moyen de sélection de mode (51) qui est commutable entre une définition automatique et une définition manuelle en vue de définir un ordre de priorité d'informations de sélection de mode de la pluralité de réseaux de communication radio par la saisie d'un utilisateur du terminal (5) ;
un moyen de détermination de réseau (52) pour déterminer dans quelle zone de la pluralité de réseaux de communication radio, se situe le terminal (5), sur la base de la présence de signaux de commande propres à chaque réseau de communication radio ;
un moyen de sélection de réseau (53) pour sélectionner l'un de la pluralité de réseaux de communication radio déterminés par le moyen de détermination de réseau (52) sur la base de l'ordre de priorité des informations de sélection de mode, défini par le moyen de sélection de mode (51), selon la définition automatique ou la définition manuelle, et pour connecter le terminal portable (5) au réseau de communication radio sélectionné ; et
une interface apte à amener le terminal portable (5) à servir de module d'extension pour la communication, en amenant le terminal portable (5) à être associé à une autre interface fournie pour un équipement externe (7) ;
dans lequel le moyen de sélection de mode (51) amène l'utilisateur à sélectionner un menu de sélection de mode affiché sur un affichage, de manière à définir les informations de sélection de mode ; et
à la fois dans le cadre d'une communication vocale et d'une communication de données, le menu de sélection de mode inclut au moins trois alternatives, à savoir : « sélection à partir des infrastructures », « sélection à partir des contenus » et « sélection à partir des index » ;
dans le cas d'une « sélection à partir des infrastructures », les informations de sélection de mode selon une sélection, réalisée directement à partir de la pluralité de réseaux de communication radio, sont définies sur le moyen de sélection de mode ;
dans le cas d'une « sélection à partir des contenus », les informations de sélection de mode selon une sélection réalisée en outre à partir de types de contenus sont définies sur le moyen de sélection de mode sur la base d'une base de données ; et
dans le cas d'une « sélection à partir des index », les informations de sélection de mode selon une sélection réalisée en outre à partir d'index de communication sont définies sur le moyen de sélection de mode, sur la base de la base de données.

2. Terminal portable multimode (5) selon la revendication 1, dans lequel le moyen de détermination de réseau (52) est apte à identifier un réseau de communication radio mobile, un réseau WiMAX IEEE802.16e, et un réseau LAN radio IEEE802.11 en tant que la pluralité de réseaux de communication radio de différentes normes.

3. Terminal portable multimode (5) selon la revendication 1, comprenant une interface Ethernet (marque déposée) (6) destinée à mettre en oeuvre une communication de données, en étant connectée à un équipement externe (7).

4. Terminal portable multimode (5) selon la revendication 3, configuré en tant qu'un module d'extension de communication en ce que l'interface est associée à une interface Ethernet (marque déposée) (6) qui est fournie à l'équipement externe (7).

5. Programme de terminal portable multimode qui permet à un ordinateur d'un terminal portable multimode (5) apte à être connecté à une pluralité de réseaux de communication radio de différentes normes, d'exécuter :
une fonction destinée à définir un ordre de priorité d'informations de sélection de mode de la pluralité de réseaux de communication radio, par la saisie d'un utilisateur du terminal (5), ladite fonction pouvant être commutée entre une définition automatique et une définition manuelle ;
une fonction destinée à déterminer dans quelle zone de la pluralité de réseaux de communication radio se situe le terminal (5), sur la base de la présence de signaux de commande propres à chaque réseau de communication radio ;
une fonction destinée à sélectionner l'un de la pluralité de réseaux de communication radio déterminés par la fonction de détermination sur la base de l'ordre de priorité des informations de sélection de mode, défini par la fonction de sélection, selon la définition automatique ou la définition manuelle, et à connecter le terminal portable (5) au réseau de communication radio sélectionné ; et
une fonction utilisant une interface pour amener le terminal portable (5) à servir de module d'extension pour la communication, en amenant le terminal portable (5) à être associé à une autre interface fournie pour un équipement externe (7) ;
dans lequel la fonction de sélection amène l'utilisateur à sélectionner un menu de sélection de mode affiché sur un affichage, de manière à définir les informations de sélection de mode ; et
dans lequel, à la fois dans le cadre d'une communication vocale et d'une communication de données, le menu de sélection de mode inclut au moins trois alternatives, à savoir : « sélection à partir des infrastructures », « sélection à partir des contenus » et « sélection à partir des index » ;
dans le cas d'une « sélection à partir des infrastructures » sur le menu de sélection de mode, une fonction destinée à définir les informations de sélection de mode selon une sélection réalisée directement à partir de la pluralité de réseaux de communication radio ;
dans le cas d'une « sélection à partir des contenus » sur le menu de sélection de mode, une fonction destinée à définir les informations de sélection de mode selon une sélection réalisée en outre à partir de types de contenus sur la base d'une base de données ; et
dans le cas d'une « sélection à partir des index » sur le menu de sélection de mode, une fonction destinée à définir les informations de sélection de mode selon une sélection réalisée en outre à partir d'index de communication sur la base de la base de données.

6. Programme de terminal portable multimode selon la revendication 5, lequel permet à l'ordinateur d'exécuter une fonction destinée à identifier un réseau de communication radio mobile, un réseau WiMAX IEEE802.16e, et un réseau LAN radio IEEE802.11, en tant que la pluralité de réseaux de communication radio de différentes normes.

7. Programme de terminal portable multimode selon la revendication 5, lequel permet à l'ordinateur d'exécuter une fonction destinée à mettre en oeuvre une association avec un équipement externe (7) par l'intermédiaire d'une interface Ethernet (marque déposée) (6).

8. Programme de terminal portable multimode selon la revendication 5, lequel permet à l'ordinateur d'exécuter une fonction destinée à mettre en oeuvre une association avec une interface Ethernet (marque déposée) (6) qui est fournie à l'équipement externe (7) par l'intermédiaire de l'interface Ethernet (marque déposée) (6).

9. Procédé de permutation de mode pour un terminal portable multimode (5) apte à être connecté à une pluralité de réseaux de communication radio de différentes normes, comprenant les étapes consistant à :
définir un ordre de priorité d'informations de sélection de mode de la pluralité de réseaux de communication radio par la saisie d'un utilisateur du terminal (5), ladite définition étant commutable entre une définition automatique et une définition manuelle ;
déterminer dans quelle zone de la pluralité de réseaux de communication radio se situe le terminal (5), sur la base de la présence de signaux de commande propres à chaque réseau ;
sélectionner l'un de la pluralité de réseaux de communication radio déterminés au cours de l'étape de détermination sur la base de l'ordre de priorité des informations de sélection de mode, défini au cours de l'étape de sélection, selon la définition automatique ou la définition manuelle, et connecter le terminal portable (5) au réseau de communication radio sélectionné ; et
amener, en utilisant une interface, le terminal portable (5) à servir de module d'extension pour la communication, en amenant le terminal portable (5) à être associé à une autre interface fournie pour un équipement externe (7) ;
dans lequel les informations de sélection de mode sont définies manuellement en amenant l'utilisateur à opérer une sélection à partir d'un menu de sélection de mode dans le terminal portable multimode (5) ; et
à la fois dans le cadre d'une communication vocale et d'une communication de données, le menu de sélection de mode inclut au moins trois alternatives, à savoir : « sélection à partir des infrastructures », « sélection à partir des contenus » et « sélection à partir des index » ;
dans le cas d'une « sélection à partir des infrastructures », les informations de sélection de mode selon une sélection réalisée directement à partir de la pluralité de réseaux de communication radio, sont définies ;
dans le cas d'une « sélection à partir des contenus », les informations de sélection de mode selon une sélection réalisée en outre à partir de types de contenus sont définies sur la base d'une base de données ; et
dans le cas d'une « sélection à partir des index », les informations de sélection de mode selon une sélection réalisée en outre à partir d'index de communication sont définies sur la base de la base de données.

10. Procédé de permutation de mode selon la revendication 9, dans lequel la pluralité de réseaux de communication radio de différentes normes sont un réseau de communication radio mobile, un réseau WiMAX IEEE802.16e, et un réseau LAN radio IEEE802.11.
